## Europäisches Patentamt
## European Patent Office
## Office européen des brevets

(19)

(11) Veröffentlichungsnummer: **0 108 348**
**B1**

(12)

# EUROPÄISCHE PATENTSCHRIFT

(45) Veröffentlichungstag der Patentschrift:
**07.10.87**

(51) Int. Cl.⁴: **B 25 J 1/00**, B 25 J 13/08,
G 01 L 1/22, G 05 G 1/02

(21) Anmeldenummer: **83110760.2**

(22) Anmeldetag: **27.10.83**

(54) Fernsteuereinrichtung zum Eingeben und/oder zum Programmieren von Bewegungen, Kräften und Drehmomenten eines Roboters, eines Manipulators, und eines graphischen Displays mit Hilfe eines sechsdimensionalen Kraft-Momenten-Sensors.

(30) Priorität: **30.10.82 DE 3240251**

(43) Veröffentlichungstag der Anmeldung:
**16.05.84 Patentblatt 84/20**

(45) Bekanntmachung des Hinweises auf die Patenterteilung:
**07.10.87 Patentblatt 87/41**

(84) Benannte Vertragsstaaten:
**BE CH DE FR GB IT LI SE**

(56) Entgegenhaltungen:
**DE - A - 2 740 507**
**DE - A - 3 045 094**
**DE - A - 3 139 431**
**DE - C - 2 727 704**
**GB - A - 2 060 204**
**US - A - 4 156 835**

**"Robot-Teaching via Force-Torque-Sensors"**,
**G.Hirzinger, Sixth European Meeting on Cybernetics and Systems Research, EMCSR 82, Vienna, April 13-16, 1982**
**"Kraft-Momenten-Fühler" von L.Schmieder, Fertigung, 6/78, Verlag Technische Rundschau, Bern (CH)**

**Die Akte enthält technische Angaben, die nach dem Eingang der Anmeldung eingereicht wurden und die nicht in dieser Patentschrift enthalten sind.**

(73) Patentinhaber: **Deutsche Forschungs- und Versuchsanstalt für Luft- und Raumfahrt e.V., Linder Höhe Postfach 90 60 58, D-5000 Köln 90 (DE)**

(72) Erfinder: **Heindl Johann, Ulrich-Haid-Strasse 5, D-8031 Seefeld (DE)**
Erfinder: **Hirzinger, Gerhard, Dr., Hedwigstrasse 24, D-8031 Seefeld (DE)**

(74) Vertreter: **von Kirschbaum, Albrecht, Dipl.-Ing., Hermann-Ehlers-Strasse 21a, D-8034 Germering (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Fernsteuereinrichtung zum Eingeben und/oder zum Programmieren von Bewegungen, Kräften und Drehmomenten eines Roboters, eines Manipulators und eines graphischen Displays mit Hilfe eines sechsdimensionalen Kraft-Momenten-Sensors.

Üblicherweise werden Industrieroboter oder Manipulatoren über Tastenfelder programmiert, womit jedoch nur schwer nicht-geradlinige Kurven im Raum erzeugbar bzw. realisierbar sind. Ähnliches gilt auch für die Programmierung durch numerische Eingaben über Rechnerterminals sowie die Verwendung sogenannter «Joy-Sticks», über welche derzeit noch keine sechsdimensionalen Kommandos eingegeben werden können.

Einrichtungen, mit denen der Roboter nach Abschalten von Gelenkmotoren über einen Handgriff geführt wird, sind aufgrund der erforderlichen mechanischen Ausbalancierung insbesondere von dem Gewicht des verwendeten Werkzeugs abhängig. Ausserdem sind über solche Einrichtungen dem Roboter, falls dieser überhaupt über einen Kraft-Momenten-Fühler oder -Sensor verfügt, nur äusserst umständlich die geforderten Arbeitskräfte/-momente mitteilbar.

Als Kraft-Momenten-Sensor kann beispielsweise ein Kraft-Drehmoment-Fühler verwendet werden, wie er in der DE 27 27 704 oder in der Zeitschrift «Fertigung» 6/78 aus dem Verlag Technische Rundschau, Bern im einzelnen beschrieben ist. Bei diesem Kraft-Momenten-Fühler ist eine ringförmige Grundplatte, welche beispielsweise am Arm eines Roboters oder Manipulators befestigt sein kann, über vier Speichen mit einem massiven Zwischenstück verbunden, das seinerseits einen an vier Stützen befestigten Lastaufnehmer trägt. Hierbei sind sämtliche äusseren Kräfte auf das von den Speichen gebildete Achsenkreuz bezogen. Die Lastaufnehmerplatte bewirkt lediglich eine Verschiebung des Lastangriffspunktes und eine mechanische Begrenzung der Verformungen, so dass eine Überlastung von Dehnungsmessstreifen vermieden ist. Die bei einer Belastung auftretende Verbiegung der Stützung und Speichen wird durch solche Dehnungsmessstreifen gemessen.

Durch eine in Richtung der Stützung wirkende Normalkraft werden alle vier Speichen gleichmässig verbogen, während die Stützen lediglich auf Druck beansprucht werden. Eine in der Ebene des Speichenkreuzes angreifende Tangentialkraft wird genauso wie ein Drehmoment um die vom Speichenkreuz senkrechte Achse nur von den auf den Stützen aufgebrachten Dehnungsmessstreifen registriert. Durch ein Drehmoment um die von zwei gegenüberliegenden Speichen gebildete Achse werden dagegen lediglich die beiden anderen Speichen verbogen. Die auf den übrigen Speichen und Stützen aufgebrachten Dehnungsmessstreifen spüren dann von einer solchen Beanspruchung nichts.

Durch an der Lastaufnehmerplatte angreifende Kräfte und Momente treten in den Speichen und Stützen des Kraft-Drehmoment-Fühlers sowohl Dehnungen und Stauchungen als auch Biegespannungen auf. Hierbei ist der Fühler so ausgeführt, dass in drei Belastungsfällen (Normalkräfte und Drehmomente um eine tangentiale Achse) Biegelinien in den Speichen auftreten, in den Stützen jedoch nur Dehnungen oder Stauchungen, während in den anderen drei Fällen bei Einwirken von Tangentialkräften und Drehmomenten um die Normale Biegelinien in den Stützen und in den Speichen nur Dehnungen und Stauchungen hervorrufen.

Die Verformungen selbst werden mit Hilfe von Dehnungsmessstreifen erfasst, von welchen je zwei an den Ober- und Unterseiten der Speichen und an den Innenseiten senkrecht zur Kreisperipherie der Stützen angebracht und in einer Halbbrücke zusammengeschaltet werden. Die Messstreifen erfassen nur Biegungen, jedoch keine Drehungen oder Stauchungen in den Verbindungsstreben.

Ein Nachteil des bekannten Kraft-Momenten-Fühlers besteht jedoch darin, dass ein Überkoppeln von Tangentialmomenten auf Tangentialkräfte und umgekehrt nicht ausgeschlossen werden kann; solche Überkopplungsvorgänge können beispielsweise dadurch etwas gemindert werden, dass die Stützen weiter auseinandergerückt werden. Dies ist jedoch bei verschiedenen Konstruktionen aus Platzgründen nicht möglich.

Ferner liegt der durchschnittliche Fehler der mit dem bekannten Fühler gemessenen Kräfte bei 4% und der Fehler bei der Drehmomenten-Messung bei etwa 1%. Dies hat dann zur Folge, dass bei einem Griff, welcher beispielsweise im Abstand von 10 cm vom Mittelpunkt und damit vom Messzentrum dieses Kraft-Momenten-Fühlers entfernt angebracht ist und auf den beispielsweise eine Kraft von 20N ausgeübt wird, das rechnerische Drehmoment vn 20 × 10 Ncm von einer solchen Momentenmessung abgezogen werden müsste. Aufgrund der erwähnten Ungenauigkeit bei der Bestimmung der Kräfte von 4%, was in dem vorstehenden Beispiel 0,8N entsprechen würde, ergeben sich dann aber im voraus berechenbare Momentenfehler von 0,8 × 10 Ncm = 8Ncm. Aufgrund des vorhersehbaren Auftretens solcher Fehler ist jedoch ein feinfühliges Steuern eines Roboters mit einem solchen Kraft-Momenten-Sensor, der über einen in geringer Entfernung angebrachten Griff mit Kräften und/oder Momenten beaufschlagt wird, nicht möglich.

Aufgabe der Erfindung ist es daher, eine konstruktiv einfach aufgebaute und zuverlässig arbeitende Fernsteuereinrichtung zu schaffen, mit welcher feinfühlig und weitgehend fehlerfrei Programmierungen, Steuervorgänge, Bewegungen, Bearbeitungsvorgänge u.ä. aus der Ferne ausführbar sind. Dies ist mit einer Fernsteuereinrichtung der im Oberbegriff des Anspruchs 1 angegebenen Art gemäss der Erfindung durch die Merkmale im kennzeichnenden Teil dieses Anspruchs 1 gelöst. Vorteilhafte Weiterbildungen der Erfindung sind Gegenstand der Unteransprüche.

Gemäss einer bevorzugten Ausführungsform der Erfindung ist ein sechsdimensionaler Kraft-Momenten-Sensor, welcher beispielsweise der in der DE 27 27 704 beschriebenen Kraft-Drehmoment-Fühler sein kann, in einer auf einer Seite offenen Hohlkugel aus zwei starr miteinander verbundenen Hohlkugelhälften in der Weise untergebracht und fest integriert, dass der Kugelmittelpunkt annähernd mit dem Messzentrum des Kraft-Momenten-Sensor zusammenfällt. Hierbei kann die aus den zwei fest miteinander verbundenen Hohlkugelhälften gebildete Hohlkugel aus einem leichten Material, vorzugsweise aus einem harten, festen Kunststoff hergestellt sein. Selbstverständlich sind auch Abwandlungen der Kugelform möglich, insbesondere dann, wenn dadurch eine bessere Anpassung an die Anatomie der menschlichen Hand erreicht ist.

Durch die Zentrierung des Messzentrums des Kraft-Drehmoment-Sensors im Mittelpunkt der Hohlkugel können Kräfte und Momente, welche von einer die Hohlkugel umfassenden Hand ausgeübt werden, zuverlässig und einwandfrei entkoppelt werden.

Dadurch dass das Messzentrum annähernd im Mittelpunkt der Hohlkugel liegt, ist sichergestellt, dass bei einer Ausübung von Kräften keine Drehmomente erzeugt werden, und umgekehrt, dass beim Ausüben von Drehmomenten auf das Messzentrum keinerlei Kräfte erzeugt werden. Wenn die Kräfte bzw. Drehmomente durch beispielsweise auf den Kraft-Momenten-Fühler nach der DE 27 27 704 aufgebrachte Dehnungsmessstreifen festgestellt und gemessen werden, ist dadurch eine genaue auf Wegauslenkungen beruhende Messsensorik geschaffen, mit deren Hilfe auch mechanisch erfolgte Auslenkungen messbar und feststellbar sind.

Werden die in den räumlich festen, zueinander orthogonalen x, y, z-Koordinaten zu erfassenden Kräfte mit translatorischen Geschwindigkeitskommandos eines Roboter-Endeffektors, beispielsweise eines Greifers oder eines Werkzeugs, in eben diesen «kartesischen Richtungen» und die um diese Richtungsachsen zu messenden Momente mit Kommandos für die Rotationsgechwindigkeit des Endeffektors um diese Achse und einen wählbaren Drehpunkt, beispielsweise die Greifer- oder Werkzeugspitze, miteinander verknüpft, so lässt sich der Roboter-Endeffektor über die von der menschlichen Hand ausgeübten Kräfte/Momente beliebig im Raum kommandieren.

Die Beziehung zwischen Kräften/Momenten und Translations-/Rotationsgeschwindigkeiten kann über eine statische oder dynamische Zuordnung, nämlich ein sogenanntes Regelgesetz, festgelegt werden. Hierbei ist die Umrechnung kartesischer Kommandos in Roboter-Gelenkkommandos allgemeiner Stand der Technik und braucht nicht weiter erläutert zu werden. Die vom Roboter verfahrene Bahn kann abgespeichert und dadurch später beliebig oft wiederholt werden.

Um Bewegungen eines Roboters oder Manipulators zu programmieren, kann ein Sensorgriff, in dessen Inneren ein sechsdimensionaler Kraft-Momenten-Sensor untergebracht ist, raumfest, d.h. inertialfest montiert werden. In diesem Fall stimmen dann die Messrichtungen, wie oben ausgeführt, mit dem kartesischen Inertial-System des Roboters überein; die Messrichtungen des Sensors können jedoch auch auf ein werkzeugfestes Koordinatensystem abgebildet werden. Hierbei sollte der zu steuernde Roboter wenigstens fünf Bewegungsachsen besitzen. Bei dieser Betriebsart handelt es sich um eine Fernsteuerung eines Roboters oder Manipulators, wie sie beispielsweise für Telemanipulatoren in der Kernkrafttechnik, der Unterwassertechnik oder der Raumfahrt von Bedeutung ist.

Diese Betriebsart eignet sich nicht nur zur Steuerung der translatorischen und rotatorischen Freiheitsgrade eines Roboters, sondern ist im Prinzip auf alle Objekte anwendbar, die sich in bis zu drei translatorischen und drei rotatorischen Freiheitsgraden steuern lassen, wie Hubschrauben, Flugzeuge, Raumfahrzeuge, Unterwasserboote oder Objekte auf graphischen Displays, die aus verschiedenen Entfernungen oder Drehlagen betrachtet werden sollen.

Eine weitere Möglichkeit, die Bewegungen eines Roboters zu programmieren, besteht gemäss der Erfindung darin, den Sensorgriff am Endeffektor des Roboters oder Manipulators anzubringen, und so dann mit Hilfe des Sensorgriffs die vom Roboter nachzuvollziehenden Bewegungen zum Programmieren vorher durchzuführen. Die von dem im Sensorgriff untergebrachten Sensor erhaltenen Messgrössen werden dann in das raumfeste Koordinatensystem umgerechnet und dienen dann, wie in dem vorstehend beschriebenen Fall mit raumfestem Sensorgriff, zur Berechnung von Translations- und Rotationsgeschwindigkeitskommandos. In diesem Fall wird dann der Roboter von der menschlichen Hand direkt geführt, und es werden ihm dadurch die gewünschten Bewegungen gezeigt. Dies ist bei allen Arten von «Nachführrobotern» anwendbar, beispielsweise zum Lackieren von Oberflächen. Hierbei sollte der verwendete Roboter allerdings sechs Bewegungsachsen besitzen.

Wenn eine Kombination aus Roboter-Bewegungen und Bearbeitungskräften bzw. -momenten programmiert werden soll, wird zusätzlich zu dem entweder raumfest angeordneten oder an dem Endeffektor des Roboters angebrachten Sensorgriff ein weiterer sechsdimensionaler Kraft-Momenten-Sensor verwendet, der zwischen der letzten Roboterachse und dem Endeffektor des Roboters eingebaut ist; dieser Sensor wird im allgemeinen als Robotergelenksensor bezeichnet. Zur Ansteuerung des Roboters oder Manipulators werden in diesem Fall dann Zuordnungskonzepte herangezogen, über die der Roboter bei fehlendem, mechanischem Kontakt mit der Umwelt nach den beiden vorstehend beschriebenen Verfahren geführt wird, während er sich bei mechanischem Kontakt mit der Umgebung auf diejenigen Kontaktkräfte bzw. -momente einregelt, die ihm von der menschlichen Hand am Sensorgriff vorgegeben werden. Eine einfache Version dieses Konzepts besteht beispielsweise darin, dass die Translations- und Rotationskommandos für den Roboter aus der Summe der Kräfte/Momente im Sensorgriff und im Robotergelenksensor abgeleitet werden. Auf diese Weise entsteht ein fliessender Übergang zwischen Translations-/Rotations-Steuerung bei freier Roboterbewegung und bei einer Kraft-/Momentenregelung bei einem mechanischen Kontakt mit der Umwelt.

Hierbei ist es bei einem Robotergelenksensor empfehlenswert, die bei veränderter räumlicher Lage bzw. starker Beschleunigung des Endeffektors entstehenden Messgrössen die durch sein Eigengewicht bzw. seine Trägheit bedingt sind, rechnerisch zu kompensieren. Die vom Endeffektor des Roboters verfahrene Bahn und die dabei sensierten Kräfte bzw. Momente können abgespeichert und somit jederzeit für Wiederholungsvorgänge verwendet werden. Sind aufgrund der Werkzeugkonfiguration bei einem Kontakt mit der Umwelt Reaktionsmomente im Robotergelenk zu erwarten, obwohl von der menschlichen Hand nur Kräfte kommandiert werden, so kann bei Bedarf die Momenteneinkopplung des Roboter-Handgelenksensors rechnerisch ausgeschaltet werden.

Zum kombinierten Programmieren von Roboter-Bewegungen und von Bearbeitungskräften bzw. -momenten kann neben dem zweiten, im Roboter-Handgelenk angebrachten Sensor entweder der raumfest angeordnete Sensorgriff oder auch der am Endeffektor des Roboters angebrachte Sensorgriff verwendet werden. In dem zuletzt erwähnten Fall ist jedoch zu beachten, dass der Sensorgriff am Endeffektor nach dem letzten Robotergelenk, aber vor dem Robotergelenksensor anzubringen ist. Hierdurch eröffnen sich neue Möglichkeiten der Roboterprogrammierung, indem nicht nur die Bewegungs-Kommandierung eines Roboters in sechs Freiheitsgraden mit einer Hand ermöglicht ist, sondern es gleichzeitig auch gestattet ist, dem Roboter unmittelbar die auf die Umwelt auszuübenden Kräfte bzw. Momente mitzuteilen.

Nachfolgend wird die Erfindung anhand einer bevorzugten Ausführungsform unter Bezugnahme auf die anliegenden Zeichnungen im einzelnen erläutert. Es zeigen:

Fig. 1 eine perspektivische, teilweise aufgeschnittene Darstellung eines Sensorgriffs gemäss der Erfindung;

Fig. 2a eine vertikale Schnittansicht entlang der Linie A–B in Fig. 1 und

Fig. 2b eine horizontale Schnittansicht entlang der Linie C–D in Fig. 1.

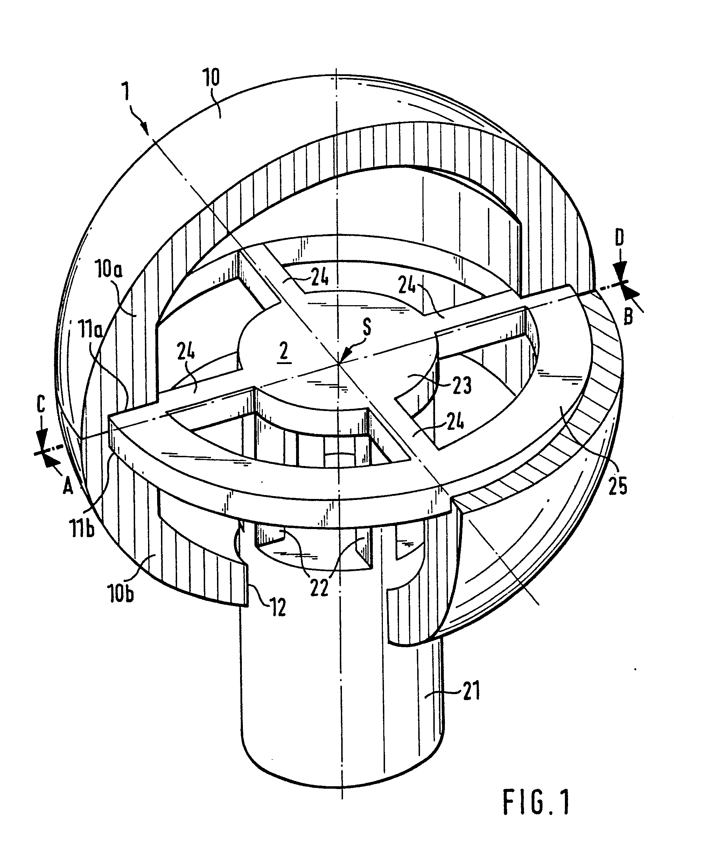

In Fig. 1 ist ein sechsdimensionaler Kraft-Momenten-Sensor 2, der vorzugsweise dem in dem DE PS 27 27 704 beschriebenen Kraft-Drehmoment-Fühler entspricht, in einer aus einem leichten Material, wie beispielsweise einem festen, harten Kunststoff hergestellten Hohlkugel 10 fest integriert. Hierbei besteht die Hohlkugel 10 aus zwei Kugelhälften 10a und 10b, wobei die eine, in Fig. 1 untere Kugelhälfte 10b unten eine Öffnung 12 aufweist. An den Schnittflächen der beiden Hohlkugelhälften 10a und 10b ist je eine Nut 11a bzw. 11b ausgebildet, in welchen ein Ring 25 des Sensors fest gehalten ist, wenn die beiden Hohlkugelhälften 10a und 10b fest miteinander verbunden sind, beispielsweise miteinander verschraubt sind.

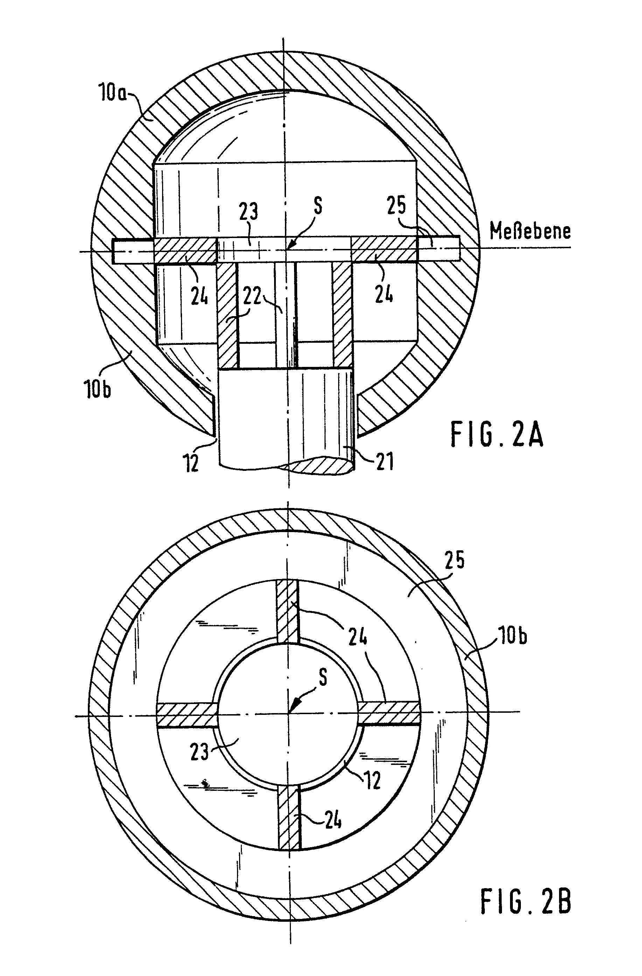

Der Ring 25 des Sensors 2 ist über vier Speichen 24 mit einer Lastaufnahmeplatte 23 verbunden. Die Lastaufnahmeplatte 23 ist über sich senkrecht zu den Speichen 24 erstreckenden Stützen 22 mit einem Grundteil 21 fest verbunden, das in Fig. 1 nach unten aus der Öffnung 12 der unteren Hohlkugelhälfte 10b vorsteht. In der dargestellten Ausführungsform ist der Kraft-Momenten-Sensor 2 so in der aus zwei Kugelhälften 10a, 10b zusammengesetzten Hohlkugel 10 integriert, dass der Kugelmittelpunkt angenähert mit dem Messzentrum S des Sensors 2 zusammenfällt. Diese Anordnung des Kraft-Momenten-Sensors 2 in der Hohlkugel 10 wird in ihrer Gesamtheit als Sensorgriff 1 bezeichnet. Aufgrund der Zentrierung des Kugelmittelpunktes in dem Messzentrum S des Sensors 2 können die Kräfte und Momente zuverlässig entkoppelt werden, welche von einer den Sensorgriff 1 umfassenden Hand ausgeübt werden. An den Ober- und Unterseiten der Speichen 24 und an den senkrecht zur Ringperipherie liegenden Seiten der Stützen 22 sind beispielsweise (in Fig. 1, 2a und 2b nicht dargestellte) Dehnungsmessstreifen angebracht, welche die Verformungen oder Verkrümmungen messen. Statt der Verkrümmungen können auch die senkrechten Verschiebungen von mindestens drei Punkten der Lastaufnehmerplatte 23 gegenüber der Ebene des Rings 25 und die waagrechten Verschiebungen von mindestens drei Punkten auf der Lastaufnehmerplatte 23 oder des Rings 25 gegenüber dem Grundteil 1 mittels Verlagerungsgebern gemessen werden.

**Patentansprüche**

1. Fernsteuereinrichtung zum Eingeben und/oder zum Programmieren von Bewegungen, Kräften und Drehmomenten eines Roboters, eines Manipulators und eines graphischen Displays mit Hilfe eines sechsdimensionalen Kraft-Momenten-Sensors, dadurch gekennzeichnet, dass der Kraft-Momenten-Sensor (2) in einer auf einer Seite offenen Hohlkugel (10) aus zwei starr miteinander verbundenen Hohlkugelhälften (10a, 10b) nämlich einer geschlossenen Hohlkugelhälfte (10a) und einer Hohlkugelhälfte (10b) mit einer Öffnung (12), dessen Achse senkrecht zur Schnittfläche der einen Hohlkugelhälfte (10b) verläuft, in der Weise untergebracht und fest integriert ist, dass der Kugelmittelpunkt annähernd mit dem Messzentrum des Kraft-Momenten-Sensors (2) zusammenfällt.

2. Fernsteuereinrichtung nach Anspruch 1, dadurch gekennzeichnet, dass die aus den zwei fest miteinander verbundenen Kugelhälften (10a, 10b) gebildete Hohlkugel (10) aus einem leichten Material, vorzugsweise aus einem harten, festen Kunststoff hergestellt ist.

3. Fernsteuereinrichtung nach einem der Ansprüche 1 oder 2, dadurch gekennzeichnet, dass an den Schnittflächen der Hohlkugelhälften (10a, 10b) in den beiden Kugelhälften (10a, 10b) je eine Nut (11a, 11b) zur Aufnahme und festen Halterung eines Rings (25) des Kraft-Momenten-Sensors (2) ausgebildet ist, welcher Ring (25) über Speichen (24) mit einer Lastaufnahmeplatte (23) verbunden ist, während diese (23) über sich senkrecht zu den Speichen (24) erstreckende Stützen (22) mit einem aus der Öffnung (12) der einen Halbkugelhälfte (10b) vorstehenden Grundteil (21) verbunden ist, so dass das Messzentrum des Kraft-Momenten-Sensors (2) in der Mitte der kreisförmigen Schnittflächen der beiden Hohlkugelhälften (10a, 10b) und damit etwa im Mittelpunkt der Hohlkugel (10) liegt.

## Claims

1. Remote control equipment for the putting-in and/or the programming of movements, forces and torques of a robot, a manipulator and a graphical display with the aid of a six-dimensional force-moment sensor, characterised thereby, that the force-moment sensor (2) is housed and firmly integrated in a hollow sphere (10) – which is open on one side and formed of two hollow sphere halves (10a, 10b), which are rigidly connected each with the other, namely a closed hollow sphere half (10a) and a hollow sphere half (10b) with an opening (12), the axis of which extends perpendicularly to the section plane of the one hollow sphere half (10b) – in such a manner that the centre of the sphere co-incides approximately with the measurement centre of theforce-moment sensor (2).

2. Remote control equipment according to claim 1, characterised thereby, that the hollow sphere (10), which is formed of the two hollow-sphere halves (10a, 10b), which are firmly connected each with the other, is produced of a light material, preferably of a hard solid synthetic material.

3. Remote control equipment according to one of the claims 1 or 2, characterised thereby, that a respective groove (11a, 11b) for the reception and firm mounting of a ring (25) of the force-moment sensor (2) is formed in both the sphere halves (10a, 10b) at the section planes of the hollow sphere halves (10a, 10b), which ring (25) is connected by way of spokes (24) with a load-receiving plate (23), whilst this (23) is connected by way of stays (22), which extend perpendicularly to the spokes (24), with a base part (21) protruding from the opening (12) of the one hollow sphere half (10b) so that the measurement centre of the force-moment sensor (2) lies in the middle of the circular section planes of both the hollow sphere halves (10a, 10b) and thereby in about the centre of the hollow sphere (10).

## Revendications

1. Dispositif de commande à distance pour l'indication et/ou la programmation de mouvements, forces et moments de rotation d'un robot, d'un manipulateur et d'un affichage graphique à l'aide d'un détecteur de moments-force à six dimensions, caractérisé en ce que le détecteur de moments-force (2) est agencé et intégré rigidement dans une sphère creuse (10) ouverte sur un côté, composée de deux moitiés de sphère creuse (10a, 10b) reliées rigidement entre elles, à savoir une moitié de sphère creuse fermée (10a) et une moitié de sphère creuse (10b) avec une ouverture (12) dont l'axe s'étend perpendiculairement à la surface de coupe d'une moitié de sphère creuse (10b), de telle sorte que le centre de la sphère coïncide approximativement avec le centre de mesure du détecteur de moments-force (2).

2. Dispositif de commande à distance suivant la revendication 1, caractérisé en ce que la sphère creuse (10) formée par deux moitiés de sphère creuse (10a, 10b) reliées rigidement entre elles, est faite d'une matière légère, de préférence en une matière synthétique solide dure.

3. Dispositif de commande à distance suivant une des revendications 1 ou 2, caractérisé en ce que sur chacune des surfaces de coupe des moitiés de sphère creuse (10, 10b), une rainure (11a, 11b) est pratiquée dans les deux moitiés de sphère creuse (10a, 10b) pour recevoir et maintenir fermement une bague (25) du détecteur de moments-force (2), bague (25) qui est reliée par des rayons (24) à une plaque réceptrice de charge (23), tandis que celle-ci (23) est reliée par des supports (22) s'étendant perpendiculairement aux rayons (24), à une partie de base (21) faisant saillie hors de l'ouverture (12) d'une moitié de sphère creuse (10b), de telle sorte que le centre de mesure du détecteur de moments-force (2) se situe au centre des surfaces de coupe circulaires des deux moitiés de sphère creuse (10a, 10b) et donc environ au centre de la sphère creuse (10).

FIG.1

FIG. 2A

FIG. 2B